(19)

Europäisches
Patentamt
European
Patent Office
Office européen
des brevets

(11) **EP 2 104 023 A2**

(12) **EUROPEAN PATENT APPLICATION**

(43) Date of publication:
**23.09.2009 Bulletin 2009/39**

(51) Int Cl.:
***G06F 3/041*** *(2006.01)*

(21) Application number: **09155483.2**

(22) Date of filing: **18.03.2009**

| | |
|---|---|
| (84) Designated Contracting States:<br>**AT BE BG CH CY CZ DE DK EE ES FI FR GB GR HR HU IE IS IT LI LT LU LV MC MK MT NL NO PL PT RO SE SI SK TR**<br>Designated Extension States:<br>**AL BA RS** | (71) Applicant: **Swedin, Anders**<br>**252 51 Helsingborg (SE)** |
| | (72) Inventor: **Swedin, Anders**<br>**252 51 Helsingborg (SE)** |
| (30) Priority: **18.03.2008 SE 0800626** | (74) Representative: **Johansson, Magnus**<br>**Awapatent AB**<br>**Box 1066**<br>**251 10 Helsingborg (SE)** |

(54) **Method and apparatus at a touch sensitive device**

(57)    This invention relates to a method for increasing the resolution of a touch sensitive display by measuring the properties of an electrical connection between an electrode on the display and an object located in the vicinity of the display and determining the distance between the object and the electrode based in the measured properties of the electrical connection

*Fig. 7*

EP 2 104 023 A2

**Description**

**Technical field**

The present invention generally relates to touch sensitive displays and more particular to a method and apparatus for increasing the resolution of a touch sensitive display in respect of determining the point of contact of a detected touch.

**Background of the invention**

Touch sensitive devices are widely used in electronic equipment in order to facilitate the input of information from a user of the electronic equipment to an application running on the electronic equipment. Especially, the use of touch sensitive displays is almost customary in the field of handheld devices such as mobile telephones and personal digital assistants (PDA:s), but the use of touch sensitive displays as input/output device in control rooms in industry applications is also steadily increasing.

The most commonly used display today is the Liquid Crystal Display (LCD) which may easily be provided with touch sensitivity. However, other display technologies are evolving and different solutions are provided in the art for providing also these new display technologies with touch sensitivity. For the sake of clarity will the disclosure below focus on the application of touch sensitivity on an LCD, but it is emphasized that the inventive concept disclosed below is applicable on any form of display irrespective of design technology, such as variants of the LCD, e.g. Thin Film Transistor Displays (TFT) as well as other display techniques, such as Plasma Display Panels (PDP), Vacuum Fluorescent Displays (VFD), Ferroelectric Liquid Crystal displays (FLC), Surface-stabilized Cholesteric Texture-type (SSCT) displays, Organic Light-Emitting Diode (OLED) displays, and Liquid Crystal on Silicon (LCOS) displays. Furthermore, the inventive concept disclosed below is also applicable to a "static" background such as an advertising sign which may hence be made interactive in that a person viewing the sign may e.g. press imaginary buttons on the sign.

Many different techniques for providing touch sensitivity to e.g. LCD displays have been presented in the art and the most common solution today is to use a transparent touch sensitive layer which is placed on top of the display. The touch sensitive layer is normally in form of two flexible superimposed plastic sheets that are separated a small distance by means of insulating spacers. On the surfaces of the sheets facing towards each other, a matrix-like pattern of electrical conductors are arranged, which pattern establishes an electric contact between the sheets at the location where the touch sensitive layer is depressed. A control unit scanning the matrix-like pattern on the plastic sheets may then detect the electric contact between the sheets and determine the coordinates for the depression on the display.

Another approach for providing a touch sensitive display is to provide a display which detects a touch on the display not by means detecting an electric contact between conductors as with the solution disclosed above, but by using capacitive properties of the display. A capacitive coupling from the display to the object (normally a finger or a stylus) touching the display makes it possible to detect a touch on the display as well as determine the position of the touch.

When utilizing the capacitive coupling between the touch sensitive display and an object in the vicinity of the display in order to detect a touch, it is possible to either use a separate layer (i.e. substrate) on which electrodes exclusively used for sensing a touch are disposed or to use the display electrodes disposed on one of the internal layers of the display (i.e. the electrodes used for presenting information on the display).

For all techniques disclosed above, the resolution of the display in respect of determining the position of a touch on the display depends on the arrangement of the electrodes used for sensing the touch. An arrangement in which the electrodes are closely spaced will provide a higher resolution than a corresponding arrangement where the electrodes are spaced further apart.

The cost for developing and manufacturing a touch sensitive display increases as the resolution of the display increases. Firstly, the technique used for disposing the electrodes on the substrate becomes more complex as the size of the electrodes and the distance between them decreases. Secondly, as the number of electrodes increases the electrical wiring and the decoding electronics needed for scanning the electrodes on the display become more complex.

Consequently, a method and apparatus which increase the resolution of a touch sensitive display in respect determining the point of contact of a detected touch, which do not induce the above problems, are desired.

**Summary of the invention**

In view of the above, an objective of the invention is to provide a method and apparatus for increasing the resolution of a touch sensitive display by measuring properties of an electrical connection between the touch sensitive display and an object in the vicinity of the display. In particular, by measuring the properties of the electrical connection between an electrode on the display and the object located in the vicinity of the display it is possible to determine the distance between the object and the electrode. By combining the result from two or more measurements from two or more electrodes the position of a touch on display may be determined.

The electrodes used for detecting a touch may be arranged on a separate layer or may be part of the electrodes used for presenting display data on the display.

One advantage of using a separate layer carrying the touch electrodes is that the electrodes used for presenting display data may take any form and be arranged without consideration of the touch sensitive layer. The touch sensitive layer may hence be optimized for detecting a touch and be arranged based on specific needs, such as size and form of the object used for touching the screen (e.g. a finger, pen, stylus etc.).

An advantage of using the electrodes on the internal layers of the display for sensing a touch (i.e. the electrodes used for presenting display data) is that the need for an extra layer is removed. The brightness of the display may hence be increased.

Other objectives, features and advantages of the present invention will appear from the following detailed disclosure, from the attached claims as well as from the drawings.

Generally, all terms used in the claims are to be interpreted according to their ordinary meaning in the technical field, unless explicitly defined otherwise herein. All references to "a/an/the [element, device, component, means, step, etc]" are to be interpreted openly as referring to at least one instance of said element, device, component, means, step, etc., unless explicitly stated otherwise. The steps of any method disclosed herein do not have to be performed in the exact order disclosed, unless explicitly stated.

## Brief description of the drawings

The above, as well as additional objects, features and advantages of the present invention, will be better understood through the following illustrative and nonlimiting detailed description of preferred embodiments of the present invention, with reference to the appended drawings, where the same reference numerals will be used for similar elements, wherein:

Fig 1a-c diagrammatically illustrate a display on which electrodes are arranged in a matrix formation;
Fig 2 diagrammatically illustrates a display on which electrodes are arranged in a seven-segment formation;
Fig 3a-b diagrammatically illustrate electrode arrangement on different layers if the display
Fig. 4 is an enlarged illustration of a touch electrode in the vicinity of a finger;
Fig. 5 illustrates a first embodiment of the present invention;
Fig. 6 illustrates a second embodiment of the present invention;
Fig. 7 is an enlarged illustration of the electrical connection between touch electrodes and a finger located in the vicinity of the electrodes;

## Detailed description of preferred embodiments

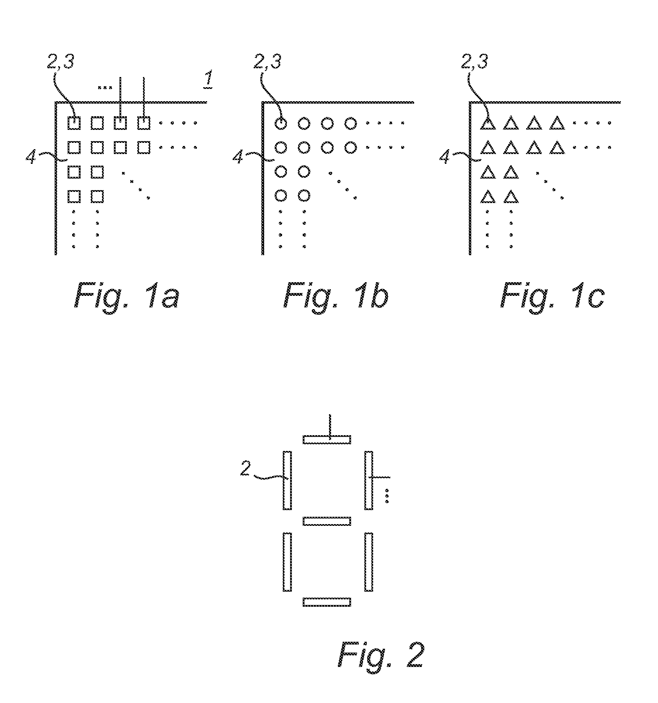

Fig. 1a illustrates a display 1 on which electrodes 2 are arranged as pixels 3 in a matrix 4. The dotted lines in the figure indicate that the matrix 4 may be of an arbitrary size depending on the required resolution and/or by the size of the display 1. As mentioned above a higher density of pixels will provide a higher resolution on the display 1. By the pixel 3 arrangement illustrated in Fig. 1 it is possible to produce text or images on the display 1 by activating selected pixels 3 such that they together form the desired text or image.

The electrodes 2 illustrated in figure 1a are square shaped, but any other shape, such as circular or triangular shapes as shown in figures 1b and 1c, respectively, or other more complex shapes, such as characters, numbers, figures etc are equally possible depending on the specific application of the display 1.

Fig. 2 illustrates an alternative electrode 2 arrangement know as a seven-segment display 1. The technology used for creating the segments (i.e. electrodes 2) may be the same as in Figs 1a-c. However the arrangement of the electrodes 2 is such that by proper activation of the pixels 3, digits may be formed on the display 1. The arrangement of pixels 3 on the display 1 may be in any form depending on the specific requirements put on the display 1.

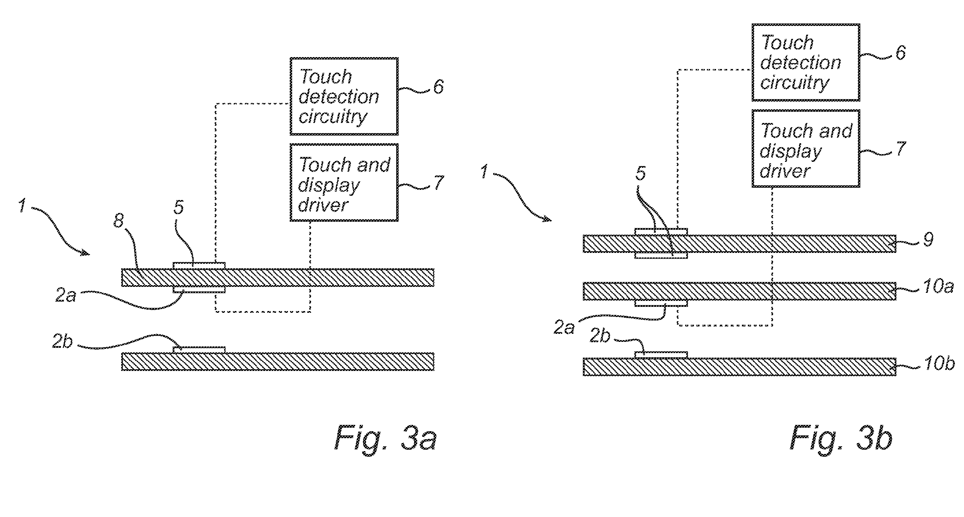

With reference to Figures 3a and 3b, as mentioned above, in order to detect a touch on the display 1 it is possible to either use a separate layer on which electrodes 5 exclusively used for sensing a touch are disposed or to use the display electrodes 2a, 2b disposed on one of the internal layers of the display 1.

In the former case the implementation of the touch sensitivity of the display 1 will not affect the operation of the display 1 in respect of displaying data by means of the electrodes 2a, 2b on the internal layers. I.e. the electrodes 5 on the touch sensitive layer will use its own wiring and dedicated electronic circuitry 6 for detecting the touch.

In the latter case the implementation of the touch sensitivity of the display 1 requires the touch detecting circuitry 7 to interact with the electronic circuitry used for presenting data on the display 1. By this arrangement, the extra touch electrodes 5 may be omitted since the touch is detected by means of electrodes 2a and/or 2b.

In any case, the touch detecting circuitry 6,7 may either be integral with or separate from the circuitry used for presenting data 7.

As shown in Fig. 3a, the touch electrodes 5 may be disposed on the same substrate 8 as the front electrode 2a of the display 1. The touch electrodes 5 may then be covered with a protective coating (not shown) in order to extend the endurance of the touch sensitive display 1.

Alternatively, as shown in Fig. 3b, the touch electrodes 5 may be disposed on a separate substrate 9 which is arranged in front of the substrates 10a, 10b carrying the display electrodes 2a, 2b. The touch electrodes 5 may either be arranged on the top or bottom surface of the substrate 9. In the latter case, no protective coating is needed in order to protect the touch electrodes 5 from wear by repeated touches since the substrate itself will protect the electrodes 5. However, a thin protective coating may still be needed in order to prevent oxidation of the electrodes 5.

Alternatively may the touch electrodes 5 be arranged both on the top and bottom surface of the substrate 9.

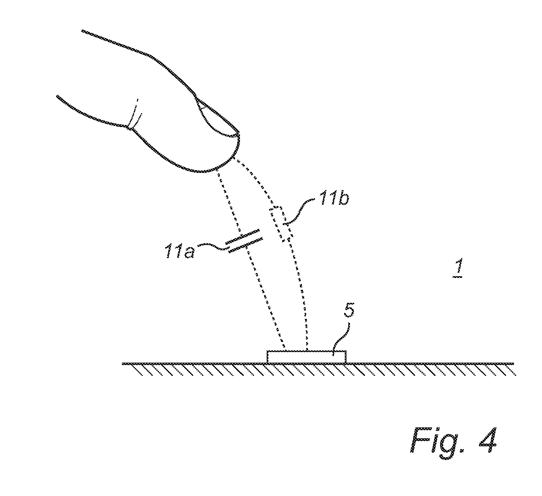

Fig. 4 is an enlarged illustration of a touch electrode 5 in the vicinity of a finger. When the finger, or any other suitable object such as an stylus, approaches the electrode 5, an electrical connection will be established between the finger and the electrode 5. In Fig. 4 this electrical connection is illustrated by means of a capacitance 11a and a resistance 11b. The closer the finger gets to the display the greater the electrical connection will become. I.e. if the finger is located a certain distance x from the electrode 5 the electrical discharge rate from the electrode 5 to the finger will assume a certain value. If the distance x decreases the discharge rate from the electrode to the finger will increase. By measuring the discharge rate from the electrode 5 to the finger it is hence possible to determine the distance x. The environment in which the electrode 5 is situated may affect the discharge rate from the electrode 5. It is however possible to compensate for any changes in the environment and correctly determine the distance x by e.g. measuring the rate of change of the discharge rate or by calibrating the display in quiescent state. It is also possible to continuously calibrate the display by e.g. determining a moving average reflecting the environment in which a touch is to be detected.

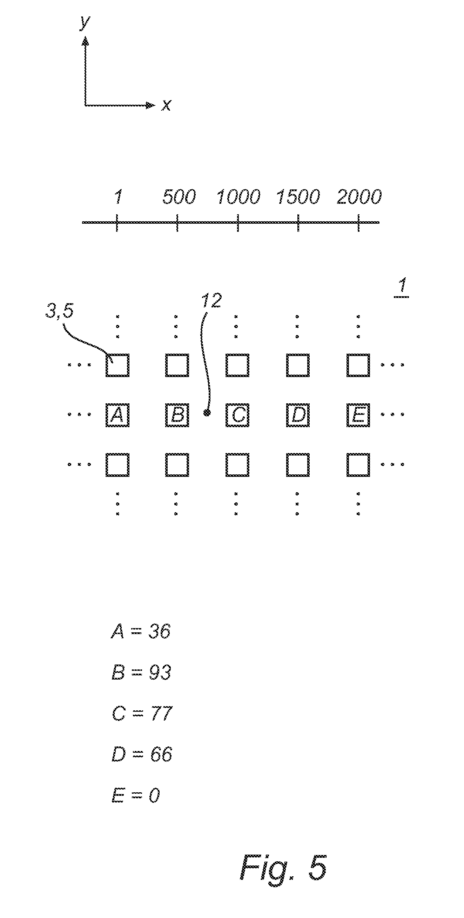

Fig. 5 illustrates a first embodiment of the present invention for increasing the resolution of the touch sensitive display. The pixels 3 illustrated in Fig. 5 represent a portion of a touch sensitive display 1 comprising more pixels 3 as indicated by the dotted lines. However, it is equally possible that the touch sensitive display 1 comprises fewer pixels 3 than shown in the figure.

By way of example, the read-out from the pixel 3 (electrode 2) denoted "A" in Fig. 5 is "36". This value may, as disclosed in relation to Fig. 4 above, correspond to the discharge rate of the electrode 5 or to a potential measured at the electrode 5 due to an object present in the vicinity of the electrode 5. Correspondingly, the read-out from the pixel denoted "B" is "93", from "C" is "77", "D" is "66" and "E" is "0".

By superimposing a grid over the pixels 3 and assigning a coordinate to each pixel, in this case A=1, B=500, C=1000, D=1500 and E=2000 it is possible to increase the resolution of the touch sensitive display 1 by calculating the x-coordinate of the touch as

$$\mathrm{Eq.1} \qquad x_{touch} = \frac{36*1+93*500+77*1000+66*1500}{36+93+77+66} = 818$$

Hence, instead of detecting a touch with a resolution of only five pixels, i.e. in this case detecting a touch on the electrode 5 denoted "B" since this value is the highest, it is possible to detect a touch 12 in the area between the electrodes 5 denoted "B" and "C". The same method of estimation may be performed on the pixels 3 in the y-direction in order to establish the y-coordinate of the touch 12.

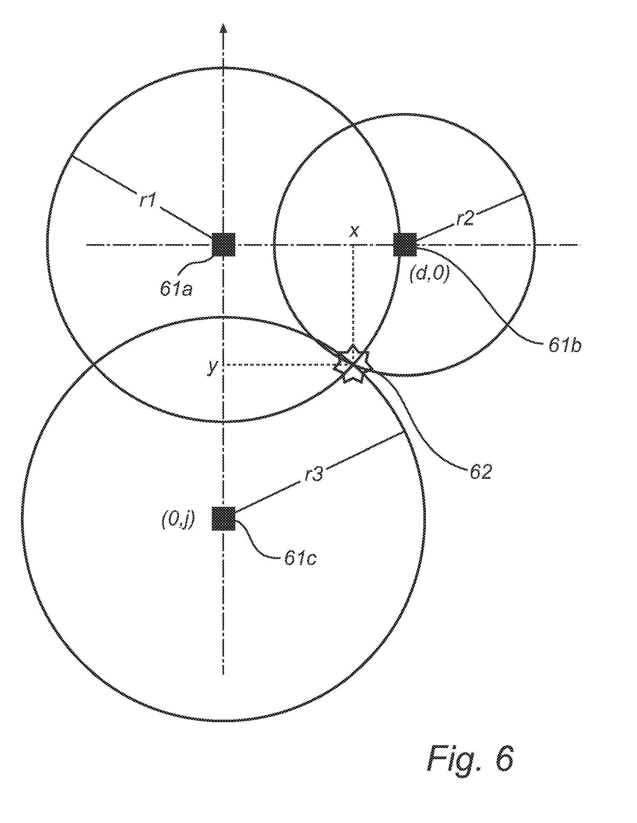

Fig. 6 illustrates a second embodiment of the present invention for increasing the resolution of the touch sensitive display 1. In the figure three electrodes 61a, 61b and 61c are shown, but it is understood that the touch sensitive display 1 may comprise more electrodes. In order to determine the position of the touch 62 the read-out values of the electrodes 61a, 61b, 61c, respectively are determined in accordance with the above disclosure in relation to Fig. 4. These values correspond to the distances r1, r2 and r3, respectively, shown in Fig. 6.

By using Pythagoras' theorem it is possible to set up an expression for the radii r1, r2 and r3 as

$$\mathrm{Eq.2} \qquad r1^2 = x^2 + y^2$$

$$\mathrm{Eq.3} \qquad r2^2 = (x-d)^2 + y^2$$

$$\mathrm{Eq.4} \qquad r3^2 = x^2 + (y-j)^2$$

By subtracting Eq.3 from Eq.2 and solve for x give

$$\mathrm{Eq.5} \qquad x = \frac{r1^2 - r2^2 + d^2}{2d}$$

Correspondingly, by subtracting Eq.4 from Eq.3 and solving for y give

$$\mathrm{Eq.6} \qquad y = \frac{r2^2 - r3^2 + j^2 + 2dx - d^2}{2j}$$

Substituting Eq.5 into Eq.6 and simplifying give

$$\mathrm{Eq.7} \qquad y = \frac{r1^2 - r3^2 + j^2}{2j}$$

Hence, from the determination of r1, r2 and r3 it is possible to determine the x and y position of the touch 62 with high accuracy. More specifically, according to the present invention it is possible to determine the position of the touch 62 based on the read-outs from the electrodes 61a, 61b and 61c and not only on their actual positions. The higher the accuracy of the read-out that is provided, the higher the resolution of the touch sensitive display becomes. From a geometrical point of view it is only the actual positions of the electrodes 61a, 61b and 61c that need to be determined in order to provide a touch sensitive display that has a resolution that is substantially higher than spacing between the actual electrodes 61a, 61b and 61c.

The triangulation of the position of the touch 62 may also be extended into three dimensions by inclusion of the z-axis. Equations 2, 3 and 4 then become

$$\mathrm{Eq.8} \qquad r1^2 = x^2 + y^2 + z^2$$

$$\mathrm{Eq.9} \qquad r2^2 = (x-d)^2 + y^2 + z^2$$

$$\mathrm{Eq.10} \qquad r3^2 = x^2 + (y-j)^2 + z^2$$

Solving the equations above for z give

$$\mathrm{Eq.11} \qquad z = \sqrt{r1^2 - x^2 - y^2}$$

It is hence, according to the present invention, possible to determine the coordinates of a "touch" with high accuracy in a three-dimensional space in the vicinity of the touch-sensitive display 1. More specifically, since it is possible to determine the location of an object in the vicinity of the display, it is possible to design a "touch potentiometer", i.e. the display 1 may present a button which may not only take the values "on" or "off", but which may act as a potentiometer which value depends on the distance between the touch-sensitive display and the object, e.g. a finger, used for pointing at the display 1.

According to a third embodiment of the present invention for increasing the resolution of the touch sensitive display 1, a look-up table (LUT) may be provided which comprises data for determining the position of the touch. More specifically, the LUT may comprise measuring data for a number of points which give the position of the touch by a simple read-out from the LUT.

For example, referring to Fig. 5 again, the read-outs from the electrodes 3 "A" to "E", i.e. 36, 93, 77, 66 and 0 give an address in the LUT which returns the value of the position of the touch based on an earlier measurement.

If the number of electrodes is great the LUT will become very large in order to provide the required resolution of the touch sensitive display. However, by collecting the electrodes into blocks and performing measurements on each block one by one it is possible to keep the LUT smaller by simply adding an offset to the determined position based on the position of the block of electrodes on the display.

According to a fourth embodiment of the present invention it is possible to increase the resolution of the touch sensitive display even further if the shape of the object used for touching the display is known. E.g. a finger will normally provide a specific target image. In a two-dimensional projection this image will be substantial circular-shaped due to the shape of the finger tip. The read-outs from the electrodes in the center of the substantial circular target image will be higher than from the electrodes at the perimeter of the target image. By using the knowledge of the target image it is hence possible to even further increase the resolution of the touch-sensitive display.

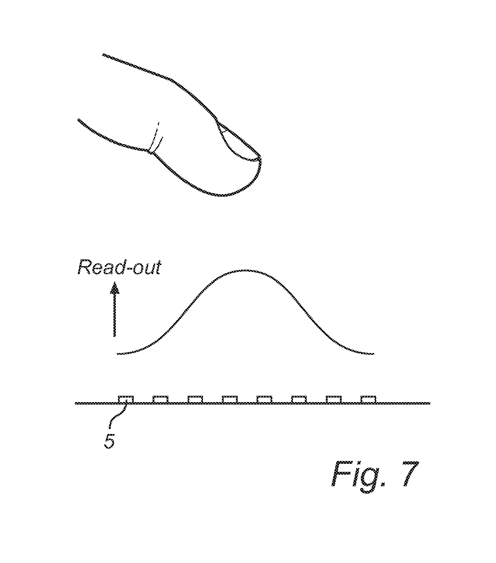

For example, referring to Fig. 7, the amplitudes of the read-out from the electrodes 5 will assume a bell-shaped figure when measuring from the perimeter of the target image through the centre and out to the opposite perimeter. By using this knowledge in combination with e.g. the read-outs shown in Fig. 5 it is possible to more accurately determine the actual position of the touch, i.e. the determined position will be left-shifted somewhat due to the fact that the read-outs from the electrodes "A" to "E" indicate that the actual position of the touch is closer to electrode "B" than to electrode "C".

A further embodiment may use a specific object, or stylus, carrying a specified touch signature, i.e. the shape of the target image is well defined and known in advance. The shape of the object used for touching the display 1 may hence provide e.g. a target image rising in steps making it possible to very accurately determine the position of the touch.

By the provision of using objects with different target images it is possible to use the objects as keys providing access to specific menus on the display. I.e. an object with a target image rising in steps may be used by a system administrator of a system using the touch sensitive display 1 in order to provide access to specific menus used for configuring the system. An "ordinary" user of the system who uses the fingertip for touching the display 1 may then be prevented from accessing the configuration menus.

An alternative embodiment of the method shown in Fig. 6 is to initially use three or more electrodes 5 on the display 1 for detecting a touch on the display 1. The electrodes 5 may be located in the centre of the display 1 and when a touch is detected and the coordinates of the touch are determined a second measurement is performed using a second set of electrodes located in the vicinity of the initially determined coordinates. Since the distance between the actual touch and the initially determined coordinates will most likely be smaller, the second measurement will provide a more accurately determined position of the touch on the display 1. This is due to the fact that the precision of the measurement increases as the distance between the actual touch and the electrodes used for the measurement decreases.

The detection method may continue using a third set of electrodes closer to the touch determined using the second set of electrodes. This iterative method may continue a predetermined number of times or until the distance between two consecutive sets of electrodes is below a predetermined threshold.

An alternative to the iterative method above is to change the measuring method once the position of the touch has been determined with a certain accuracy. For example, the position of the touch may initially be determined by a number of iterations using the method shown in Fig. 6 whereafter a final position of the touch is determined using a LUT as disclosed above. The size of the LUT may then be kept small due to the reduced size of the area or block being scanned

The invention has mainly been described above with reference to a few embodiments. However, as is readily appreciated by a person skilled in the art, other embodiments than the ones disclosed above are equally possible within the scope of the invention, as defined by the appended patent claims.

**Claims**

**1.** A method at a touch sensitive device, comprising:

measuring at least one property in a first connection between an object located a distance from said touch sensitive device and a first electrode arranged at said touch sensitive device;

measuring at least one property in a second connection between the object and a second electrode arranged at said touch sensitive device;

determining a position of the object based on said at least one property in the first connection and said at least one property in the second connection.

2. The method according to claim 1, comprising:

superimposing a coordinate system over said electrodes;

assigning a coordinate to each of said first and second electrodes and calculating the position based on said coordinates.

3. The method according to any of claim 1 or 2, wherein determining a position of said object comprises determining a position in two dimensions using the first and second electrodes.

4. The method according to claim 1 and 2, wherein determining a position of said object comprises determining a position in three dimensions using the first and second electrodes and a third electrode.

5. The method according to any of claims 1-4, wherein determining a position of said object further comprises using a look-up table (LUT) comprising measuring data related to the electrodes.

6. The method according to any of claims 1-5, comprising:

measuring at least one property in a third connection between the object and a third electrode arranged at said touch sensitive device;

measuring at least one property in a fourth connection between the object and a fourth electrode arranged at said touch sensitive device;

determining the position of the object based on said at least one property in the third connection and said at least one property in the fourth connection,

wherein the third and fourth electrodes are determined to be closer to the object than the first and second electrodes.

7. The method according to claim 6, comprising:

iteratively measuring at least one property in connections between the object and additional electrodes arranged at said touch sensitive device and determining the position of the object based on said properties.

8. The method according to any of the preceding claims, wherein the object has a known shape, comprising determining the position using the knowledge of said shape.

9. The method according to any of the preceding claims, wherein the object has a specific shape, comprising determining the position using the knowledge of said shape.

10. A touch sensitive device, comprising:

means adapted to measure at least one property in a first connection between an object located a distance from said touch sensitive device and a first electrode arranged at said touch sensitive device;

means adapted to measure at least one property in a second connection between the object and a second electrode arranged at said touch sensitive device;

means adapted to determine a position of the object based on said at least one property in the first connection and said at least one property in the second connection.

11. The touch sensitive device according to claim 10, wherein the electrodes are arranged in a coordinate system and the means adapted to determine a position is adapted to calculate the position based on said coordinates.

12. The touch sensitive device according to any of claims 10 or 11, wherein the object has a known shape and the means adapted to determine a position is adapted to determine the position using the knowledge of said shape.

**13.** The touch sensitive device according to any of claims 10-12, wherein the object has a specific shape and the means adapted to determine a position is adapted to determine the position using the knowledge of said shape.

*Fig. 1a*          *Fig. 1b*          *Fig. 1c*

*Fig. 2*

EP 2 104 023 A2

Touch detection circuitry — 6

Touch and display driver — 7

1

8

5

2a

2b

**Fig. 3a**

Touch detection circuitry — 6

Touch and display driver — 7

1

5

2a

2b

9

10a

10b

**Fig. 3b**

11a

11b

1

5

Fig. 4

*Fig. 5*

*Fig. 6*

Read-out

5

Fig. 7